# EUROPÄISCHE PATENTSCHRIFT

(11) **EP 0 422 429 B1**
(45) Veröffentlichungstag und Bekanntmachung des Hinweises auf die Patenterteilung: **31.01.1996**
(21) Anmeldenummer: 90118158.6
(22) Anmeldetag: 21.09.1990
(51) Int. Cl.: H04M 1/72

(54) **Schnurloser Telefonapparat mit einer in der Mobilstation und der Basisstation angeordneten Sendersuchlaufeinrichtung und mit einem mit der Sendersuchlaufeinrichtung verbundenen Speicher**
Cordless telephone with a channel scanning device located both in the mobile and the base stations and with a memory connected to the channel scanning device
Téléphone sans fil pourvu d'un dispositif de balayage de canaux situé à la fois dans la partie mobile et dans la station de base ainsi qu'une mémoire associé à ce dispositif

(30) Priorität: 10.10.1989 DE 3933835
(43) Veröffentlichungstag der Anmeldung: 17.04.1991
(73) Patentinhaber: GRUNDIG E.M.V. Elektro-Mechanische Versuchsanstalt Max Grundig GmbH & Co. KG, D-90762 Fürth (DE)
(72) Erfinder: Schwarz, Erwin, Dipl.-Ing., Grundig E.M.V., Kurgartenstrasse 37, D-8510 Fürth/Bay (DE); Dreykorn-Lindner, Werner, Dipl.-Ing., Grundig EMV, Kurgartenstrasse 37, D-8510 Fürth/Bay (DE)
(74) Vertreter: Dreykorn-Lindner, Werner, Dipl.-Ing.

(56) Entgegenhaltungen:
- EP-A- 0 145 171
- EP-A- 0 205 055
- DE-A- 2 408 587
- DE-A- 3 723 759
- DE-C- 3 415 473
- US-A- 5 044 010
- PATENT ABSTRACTS OF JAPAN vol. 9, no. 95 (E-310)(1818) 24. April 1985 &JP-A-59 221 039 (YAESU MUSEN K.K.)

## Beschreibung

Die Erfindung betrifft einen schnurlosen Telefonapparat mit einer in der Mobilstation und der Basisstation angeordneten Sendersuchlaufeinrichtung und mit einem mit der Sendersuchlaufeinrichtung verbundenen Speicher gemäß dem Oberbegriff des Patentanspruchs 1.

Um den Bewegungsbereich des Benutzer noch mehr zu erweitern, werden in verschiedenen Ländern zunehmend sogenannte schnurlose Telefonapparate (cordless telephone) eingesetzt. Die Informationsübertragung zwischen einer Basisstation und der zugehörigen Mobilstation des schnurlosen Telefonapparates erfolgt über ein Funkübertragungskanalpaar. Die Basisstation wird mittels einer Verbindungsdose angeschlossen, so daß für den Benutzer der Zugang zum öffentlichen Fernsprechnetz gegeben ist.

Dadurch, daß die Basisstation und die Mobilstation über einen Funkübertragungskanal miteinander in Verbindung stehen, ist der Bewegungsbereich des Benutzers auf einen Umkreis bis zu 200 m zum jeweiligen Anschluß (Verbindungsdose) erweitert.

In der Bundesrepublik Deutschland stehen für die Informationsübertragung 40 Funkkanäle zur Verfügung, welche im Frequenzbereich von 900 MHz liegen. Mit der obengenannten Übertragungsreichweite ergibt sich für die Belegung des gleichen Funkkanals durch zueinander benachbarte schnurlose Telefonapparate eine geringe Belegwahrscheinlichkeit. Liegt ein Verbindungswunsch vor, so wird von einer im Empfänger von Mobilstation und Basisstation angeordneten Sendersuchlaufeinrichtung ein Suchlauf nach einem freien Funkübertragungskanal gestartet und das Funkübertragungskanalpaar belegt. Um sicherzustellen, daß die zwischen den beiden Stationen des schnurlosen Telefonapparates übertragenen Nachrichten von keinem anderen schnurlosen Telefonapparat mitgehört werden können, daß die Gebührenzuordnung sichergestellt ist und daß die Zuordnung der Funkübertragungskanalpaare eindeutig ist, ist jedem schnurlosen Telefonapparat eine Kennung zugeordnet, welche von der Fernsprechteilnehmernummer des Fernsprechteilnehmers unabhängig ist.

Bei der Basisstation löst ein von der zugehörigen Steuereinrichtung erkannter ankommender Ruf auf der Amtsleitung die Funkkanalsuche aus. In der Mobilstation wird die Funkkanalsuche durch Betätigen der Gabelumschalt-Taste eingeleitet. In der EP-B1 0 074940 ist der dabei vorgenommene Kennungsaustausch näher beschrieben und erläutert. Ein als frei erkannter Funkübertragungskanal wird belegt, der Sender aktiviert und die Kennung als Datentelegramm über den Funkübertragungskanal gesendet. Nach dem Senden jeder Kennung wird auf ein Quittungstelegramm, d.h. der Kennung, der entsprechenden Gegenstation gewartet. Wird die Kennung (Quittungstelegramm) der Gegenstation empfangen, so wird diese von einer in den jeweiligen Stationen angeordneten Einrichtung mit der eigenen Kennung verglichen. Bei Übereinstimmung wird von der mit der Einrichtung verbundenen Steuereinrichtung die Verbindung durchgeschaltet, die Kennungsausgabe eingestellt und die bestehende Funkverbindung überwacht.

In ntz, Band 38 (1985), Heft 7, Seiten 468 bis 471 ist ein schnurloses Telefon für den 900 MHz-Bereich beschrieben. Auf Seite 468 ist angegeben, daß die 40 Funkübertragungskanäle automatisch verwaltet werden und daß in der Basisstation im Ruhezustand nacheinander alle 40 Funkkanäle abgesucht werden, um zu erkennen, wenn im Falle des Anrufs eine Anforderung von der Mobilstation für den Verbindungsaufbau vorliegt. Die Kanalabfrage erfolgt zyklisch, wobei zunächst geprüft wird, ob der gerade abgefragte Funkübertragungskanal belegt ist und falls dies nicht zutrifft, wird dieser Funkübertragungskanals als "frei notiert" und nachfolgend wird die Umschaltung auf den im Zyklus nächsten Funkübertragungskanal vorgenommen.

Auf Seite 470 ist angegeben, daß während des Gesprächs alle 15 s ein Kennungsaustausch stattfindet. Während dieses Kennungsaustausches ist kurzzeitig die Sprachübertragung unterbrochen und die Übertragung der Kennung ist in der Austastlücke leise zu hören.

Weiterhin ist in der DE-OS 35 45 572.1 ein Verfahren zum Kennungsaustausch während des Gesprächs angegeben, welches zu keiner Gesprächsunterbrechung führt. Der während des Gesprüchs stattfindende unhörbare Kennungsaustausch erfolgt durch Übertragung der Kennung als nichthörbare Außerband-Signalisierung. Die hierfür erforderliche Umschaltung von Inband-Signalisierung auf nichthörbare Außerband-Signalisierung wird von den in beiden Stationen angeordneten Steuereinrichtungen durchgeführt.

Weiterhin ist aus Technische Mitteilung PTT, Nr. 4, 1986, Seiten 152 bis 165 ein schnurloser Telefonapparat bekannt, bei dem ebenfalls zur Sicherstellung der Zuordnung beider Stationen ein Kennungsaustausch vorgenommen wird. Auf Seite 157 ist die Verbindungsüberwachung näher beschrieben und erläutert. Sinkt die "Kanalqualität" mehr als 500 ms unter einem Wert, welcher einem Geräuschabstand von 20 dB entspricht, so wird der Benutzer durch eine in der Mobilstation befindliche Anzeigeeinrichtung akustisch gewarnt. Sollte sich die Empfangsqualität in den nächsten 10 s nicht verbessern, z. B. durch eine Standortveränderung, so wird die Funkverbindung automatisch ausgelöst. Beim Verbindungsaufbau wird die Kennung, wie vorstehend geschildert, alle 15 s gesendet und von der Gegenstation quittiert. Falls das Quittungssignal z.B. zweimal innerhalb von 35 s fehlerhaft ist oder nicht empfangen wird, wird ebenfalls die Funkverbindung automatisch wieder ausgelöst.

Weiterhin ist aus der DE-PS 24 08 587 ein Funkübertragungssystem zur automatischen Kanalwahl bekannt, bei dem in den Kanalwahlanordnungen ein Speicher angeordnet ist. In dem Speicher wird neben dem "Kanal--Belegt"-Zustand eine Information über die Dauer der Belegung des betreffenden Kanals gespeichert. Die Belegungsdauer ist also ein Kriterium dafür, ob der betreffende Kanal gestört ist oder nicht.

Schließlich ist aus der DE-A-3 723 759 eine drahtlose Mehrkanal-Telefonanlage - bestehend aus einem Grundgerät und einem Hörer - bekannt , bei welcher im Standby-Betrieb das Grundgerät und der Hörer jeweils unabhängig voneinander eine Vielzahl von Kommunikationskanälen abtastet, um Störungen darauf festzustellen und die festgestellten, gestörten Kanäle über deren Kennungen abzuspeichern. Kriterium für eine Störung ist, ob die der drahtlosen Telefonanlage zugeordnete Kennung identisch auf dem jeweiligen Kommunikationskanal festgestellt wird oder nicht. Durch diese Speicherung des ,,Kanal-Belegt"-Zustands benachbarter drahtloser Telefonanlagen können Störungen mit diesen anderen drahtlosen Telefonanlagen vermieden und die Möglichkeit des Anzapfens und unerlaubten Mithörens verringert werden. Im Sprechbetrieb tastet anschließend entweder das Grundgerät oder der Hörer die nicht als gestört erkannten Kommunikationskanäle ab, um einen freien Kommunikationskanal zu finden und eine Verbindung zwischen Hörer und Grundgerät über diesen Kanal aufzubauen.

Der Erfindung liegt die Aufgabe zugrunde, einen schnurlosen Telefonapparat derart auszugestalten, daß die Auswahl eines Funkübertragungskanals unter Berücksichtigung der momentanen Funkfeldsituation und der Belegungsdauer erfolgt, wobei vorzugsweise dem zuletzt belegten Funkübertragungskanal die höchste Priorität zugewiesen wird.

Diese Aufgabe wird erfindungsgemäß durch einen schnurlosen Telefonapparat mit den Merkmalen des Patentanspruchs 1 gelöst.

Der erfindungsgemäße schnurlose Telefonapparat weist den Vorteil auf, daß auf überraschend einfache Art und Weise die Gefahr einer Abstimmung auf einen freien aber gestörten Funkübertragungskanal minimal ist. Weiterhin ist von Vorteil, daß eine Überprüfung des Funkversorgungsbereiches durchgeführt werden kann. Die Anzahl der im Speicher abgespeicherten Kanäle ist ein Kriterium für die Überprüfung des Funkversorgungsbereichs.

Der zusätzliche Schaltungsaufwand, insbesondere für den Speicher, ist relativ gering und wird im wesentlichen durch den abzuspeichernden Wert der Kanalbelegungsdauer bestimmt.

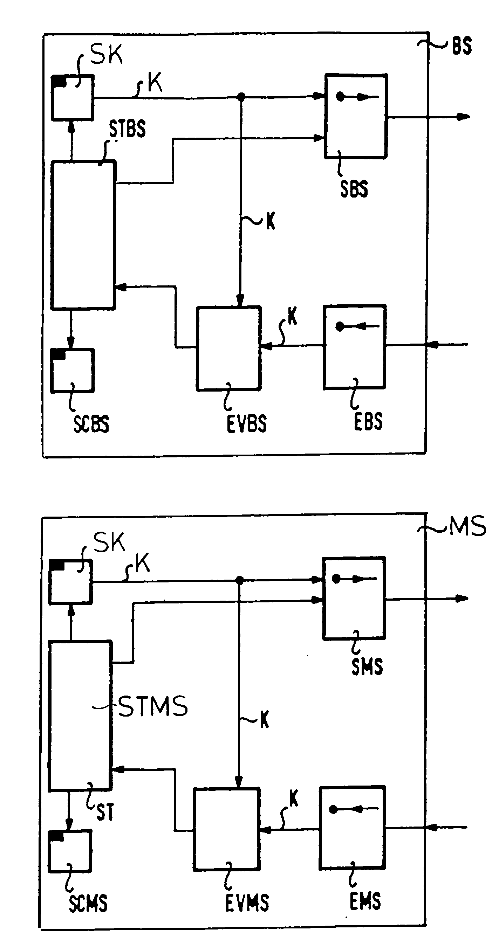

Die Erfindung wird im folgenden anhand einer in der Zeichnung dargestellten Ausführungsform näher beschrieben und erläutert.

In Mobilstation MS und Basisstation BS ist jeweils im Empfänger EMS, EBS eine Sendersuchlaufeinrichtung angeordnet, welche aus einer Anzahl von vorgegebenen Funkübertragungskanalpaaren einen freien Funkübertragungskanal auswählt. Zum Funkverbindungsaufbau wird vom Sender SMS bzw. SBS über den freien Funkübertragungskanal zum Empfänger EBS bzw. EMS der Gegenstation eine dem schnurlosen Telefonapparat zugeordnete Kennung K übertragen. Diese Kennung K ist im Kennungsspeicher SK, welcher in der Basisstation BS bzw. Mobilstation MS angeordnet ist, gespeichert. Mobilstation MS und Basisstation BS weisen jeweils Empfänger EMS bzw. EBS auf, welche mit einer Einrichtung EVMS bzw. EVBS zur Erfassung und zum Vergleichen der Kennung K verbunden sind. Bei Übereinstimmung der Kennungen wird die Verbindung zum öffentlichen Fernsprechnetz durchgeschaltet.

Zur Überwachung der Funkfeldsituation und der Funkverbindungsüberwachung ist in der Mobilstation MS und der Basisstation BS jeweils ein Speicher SCMS bzw. SCBS angeordnet, welcher jeweils mit einer Steuereinrichtung STMS bzw. STBS, den Einrichtungen EVMS bzw. EVBS und den Sendern SMS bzw. SBS verbunden ist.

Durch die ständige Abtastung aller Funkübertragungskanäle enthalten die Speicher SCMS bzw. SCBS für jeden dieser Kanäle sowohl eine Information über den Belegungzustand als auch eine Information über die Kanalbelegungsdauer. Tritt eine Störung auf, so kann auf einen ungestörten, freien Funkübertragungskanal umgeschaltet werden.

## Patentansprüche

1. Schnurloser Telefonapparat mit je einer in der Mobilstation (MS) und der Basisstation (BS) angeordneten Sendersuchlaufeinrichtung, welche zyklisch alle Funkübertragungskanäle abtastet, mit je einem mit jeder Sendersuchlaufeinrichtung verbundenen Speicher (SCMS, SCBS) zur Speicherung einer Information über den Belegungszustand der Funkübertragungskanäle und mit je einer in Mobilstation (MS) und Basisstation (BS) angeordneten Steuereinrichtung (STMS, STBS), wobei zum Verbindungsaufbau und zur Verbindungsüberwachung vom Sender (SMS, SBS) über den freien Funkübertragungskanal zum Empfänger (EBS, EMS) der Gegenstation eine dem schnurlosen Telefonapparat zugeordnete Kennung (K) übertragen wird, wobei die Empfänger (EMS, EBS) jeweils eine Einrichtung (EVMS, EVBS) zur Erfassung und zum Vergleich der Kennung (K) mit der empfängerseitigen Kennung (K) aufweisen und wobei bei Übereinstimmung der Kennung (K) die Verbindung durchgeschaltet und die Empfangsqualität der bestehenden Funkverbindung überwacht wird,
**dadurch gekennzeichnet**, daß zusätzlich im Speicher (SCMS, SCBS) eine Information über die während eines Zeitfensters ermittelte Gesamt-Belegungsdauer für jeden einzelnen Funkübertragungskanal abgespeichert wird und daß der zuletzt belegte Funkübertragungskanal die höchste Priorität beim Verbindungsaufbau aufweist.

## Claims

1. Cordless telephone set having one transmitter search device disposed in each case in the mobile station (MS) and the base station (BS), which transmitter search device cyclically scans all the radio transmission channels, having one memory (SCMS, SCBS) connected in each case to each transmitter search device for storing information about the seizure status of the radio transmission channels, and having one control device (STMS, STBS) disposed in each case in mobile station (MS) and base station (BS), an identifier (K) allocated to the cordless telephone set being transmitted by the transmitter (SMS, SBS) via the free radio transmission channel to the receiver (EBS, EMS) of the opposite station for the purpose of setting-up and monitoring a connection, the receivers (EMS, EBS) each having a device (EVMS, EVBS) for detecting and comparing the identifier (K) with the receiver-end identifier (K) and, in the event of agreement of the identifier (K), the connection being connected through and the reception quality of the existing radio connection being monitored, characterized in that information about the total duration of seizure determined during a time window for each individual radio transmission channel is additionally stored in the memory (SCMS, SCBS) and in that the radio transmission channel last seized has the highest priority when a connection is set up.

## Revendications

1. Téléphone sans fil comportant respectivement un dispositif de recherche d'émetteurs, qui est disposé dans le poste mobile (MS) et dans le poste de base (BS) et qui explore cycliquement tous les canaux de transmission radio, et comportant respectivement une mémoire (SCMS, SCBS) reliée à chaque dispositif de recherche d'émetteurs pour la mémorisation d'une information concernant l'état d'occupation des canaux de transmission radio et comportant respectivement un dispositif de commande (STMS,STBS), disposé dans le poste mobile (MS) ou dans le poste de base (BS), et dans lequel pour l'établissement de la liaison et le contrôle de la liaison, un indicatif (K), qui est associé au téléphone sans fil, est transmis de l'émetteur (SMS,SBS) au récepteur (EBS,EMS) du poste correspondant par l'intermédiaire du canal de transmission radio libre, et dans lequel le récepteur (EMS,EBS) comporte respectivement un dispositif (EVMS,EVBS) pour détecter l'indicatif (K) et le comparer à l'indicatif (K) présent côté réception, et dans lequel en cas de coïncidence de l'indicatif (K), la liaison est interconnectée et la qualité de réception de la liaison radio existante est contrôlée,
caractérisé en ce qu'en outre une information concernant la durée totale d'occupation, déterminée pendant un créneau temporel, pour chaque canal individuel de transmission radio est mémorisée en supplément dans la mémoire (SCMS, SCBS) et que le canal de transmission radio occupé en dernier lieu possède la priorité maximale lors de l'établissement de la liaison.
